# EUROPEAN PATENT SPECIFICATION

(11) **EP 2 133 602 B1**
(45) Date of publication and mention of the grant of the patent: **26.07.2017**
(21) Application number: 09251488.4
(22) Date of filing: 04.06.2009
(51) Int. Cl.: F16H 63/34

(54) **Transmission**
Getriebe
Transmission

(30) Priority: 10.06.2008 JP 2008151705
(43) Date of publication of application: 16.12.2009
(73) Proprietor: TOYOTA JIDOSHA KABUSHIKI KAISHA, Toyota-shi, Aichi-ken, 471-8571 (JP)
(72) Inventor: Nagai, Kazunari, Aichi-ken, 471-8571 (JP)
(74) Representative: D Young & Co LLP

(56) References cited:
- FR-A1- 2 838 176
- GB-A- 1 056 206
- JP-A- 11 280 901
- JP-A- 49 095 075
- US-A- 4 430 904
- US-A- 5 718 150

## Description

### BACKGROUND OF THE INVENTION

### 1. Field of the Invention

The invention relates to a transmission, and more particularly to a transmission that includes a shift select shaft.

### 2. Description of the Related Art

Transmissions according to the related art are described, for example, in Japanese Patent Application Publication No. 2007-132358 (JP-A-2007-132358) and Japanese Patent Application Publication No. 2000-179686 (JP-A-2000-179686).

JP-A-2007-132358 describes a manual transmission having an interlock member. However, a support structure of the interlock member is not described, and a structure that prevents an interlock plate from inclining is not described.

JP-A-2000-179686 describes a configuration in which a select arm member is provided at a striking rod and an interlock plate is moved by rotating the striking rod when interlocking is performed.

However, in the transmissions described in JP-A-2007-132358 and JP-A-2000-179686, the interlock plate is difficult to prevent from inclining.

FR 2838176 discloses a gearbox comprising a control shaft carrying change fingers and an interlocking key for immobilizing ratio engagement elements during change from one gear ratio to another.

### SUMMARY OF THE INVENTION

Aspects of the invention are detailed in the appended claims.

The disclosure provides a structure of a transmission in which an interlock plate is easy to prevent from inclining.

The first teaching of the disclosure relates to a transmission including a case and an interlock plate that is provided inside the case and is provided with a groove that receives an inner lever. In this transmission, the inner lever can move along an extension direction of the groove. When a shift head applies pressure to part of the interlock plate on a side of one end of the groove, part of the interlock plate on a side of the other end of the groove abuts against the case.

With such a configuration, the interlock plate can be prevented from inclining.

In the transmission according to this teaching, the interlock plate can rotate about a shift select shaft axis, and a second end of the interlock plate located on a side opposite, via the shift select shaft, a first end of the interlock plate in which the groove is provided can abut against the case. With such a configuration because both the first end and the second end abut against the case, the interlock plate can be more effectively prevented from inclining.

In the transmission according to this teaching, the groove may extend in the axial direction of the shift select shaft.

In the transmission according to this teaching, the case may have a boss portion that is formed so as to extend toward the interlock plate on the other end side of the groove and supports the shift select shaft.

In the transmission according to this teaching, part of the interlock plate on the other end side of the groove may be a protruding portion that protrudes in the axial direction of the shift select shaft toward the boss portion.

In the transmission according to this teaching, a clearance between the interlock plate and the case may be adjusted so that in a case where the shift head applies pressure to part of the interlock plate on one end side of the groove, the second end of the interlock plate abuts against a portion other than the boss portion of the case and then the protruding portion abuts against the boss portion.

In the transmission according to this teaching, a distance between a portion of the protruding portion on the side that is close to the head and the boss portion is less than a distance between a portion of the protruding portion on the side that is far from the head and the boss portion.

In the transmission according to this teaching, part of the boss portion may extend to the shift head side.

In the transmission according to this teaching, the boss portion may be formed so that a side, which is close to the shift head, is closer to the interlock plate than a side, which is far from the head.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG 1 illustrates part of a gear layout of a manual transmission according to the first embodiment of the invention;
FIG 2 is a schematic diagram of a shift pattern (shift gate shape) of a six-speed manual transmission of the first embodiment;
FIG 3 is a cross-sectional view, from the axial direction of the shift select shaft 20, of forward-stage engagement portions 22, 23, and 24 and peripheral portions thereof in the shift select mechanism;
FIG 4 is a cross-sectional view illustrating an engagement portion of the fifth-speed and sixth-speed fork shaft 53 and third synchromesh mechanism 13;
FIG 5 is a cross-sectional view, from the axial direction of a shift select shaft, of the gear knocking sound preventing device, shift forks, and peripheral portions thereof;
FIG. 6 is a side view of the third-speed and fourth-speed fork shaft 52 located in the vicinity of the installation position of the second head 62;
FIG 7 is a view of the interlock plate from the direction shown by arrow VII in FIG 3;
FIG 8 is a view of the gear knocking sound preventing device from the axial direction of the shift select shaft;
FIG 9 is a side view from the direction shown by arrow IX in FIG 8;
FIG 10 is a side view of the interlock plate from the direction shown in arrow X in FIG. 3;
FIG. 11 illustrates the operation of the inner lever as viewed from the direction shown by arrow XI in FIG 10;
FIG 12 illustrates the operation of the inner lever as viewed from the direction shown by arrow XI in FIG 10;
FIG 13 illustrates the operation of the inner lever as viewed from the direction shown by arrow XI in FIG 10;
FIG 14 illustrates the application of a force to the interlock plate;
FIG 15 is a side view of the interlock plate of the second embodiment of the invention; and
FIG 16 is a side view of the interlock plate of the third embodiment of the invention.

### DETAILED DESCRIPTION OF EMBODIMENTS

The first embodiment of the invention will be described below with reference to the appended drawings. In the embodiment below, identical or corresponding components will be assigned with identical reference symbols and redundant explanation thereof will be omitted. Various embodiments of the invention may be combined as appropriate.

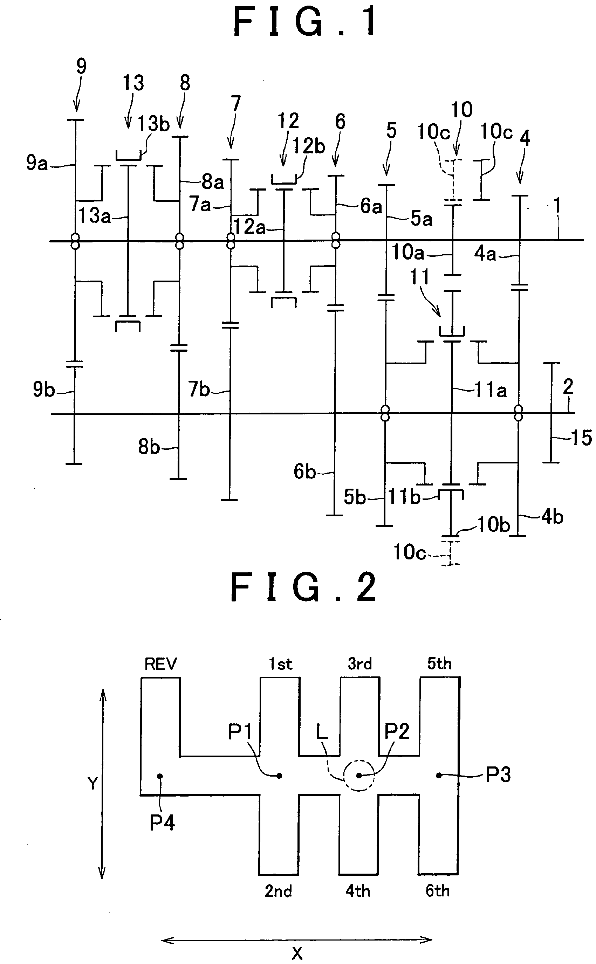

FIG. 1 illustrates part of a gear layout of a manual transmission according to an embodiment of the invention. In the gear layout shown in FIG 1, an input shaft 1, an output shaft 2, and a reverse shaft that are accommodated in a transmission case and disposed parallel to each other are rotatably supported by the transmission case.

The input shaft 1 is linked via a clutch mechanism to the crankshaft of an engine and inputs the rotational drive power of the engine by engagement operation with the clutch mechanism.

First-speed to sixth-speed gear trains 4 to 10 are provided to establish shift stages including a forward first-speed stage to a forward sixth-speed stage and a reverse stage between the input shaft 1 and output shaft 2. More specifically, a first-speed gear train 4, a second-speed gear train 5, a third-speed gear train 6, a fourth-speed gear train 7, a fifth-speed gear train 8, and a sixth-speed gear train 9 are disposed for forward movement in the order of description from the right side to the left side in the shaft axis direction, as shown in FIG. 1. A reverse gear train 10 is disposed as a gear train for reverse movement.

The first-speed gear train 4 includes a first-speed drive gear 4a that is integrally attached to the input shaft 1 and a first-speed driven gear 4b that is installed so that it rotates relative to the output shaft 2. The first-speed drive gear 4a is meshed with the first-speed driven gear 4b.

The second-speed gear train 5 is provided with a second-speed drive gear 5a that is attached to the input shaft 1 and rotates integrally with the input shaft 1 and a second-speed driven gear 5b that is installed so that it rotates relative to the output shaft 2. The second-speed drive gear 5a is meshed with the second-speed driven gear 5b.

The third-speed gear train 6 includes a third-speed drive gear 6a that is installed so that it rotates relative to the input shaft 1 and a third-speed driven gear 6b that rotates together with the output shaft 2. The third-speed drive gear 6a is meshed with the third-speed driven gear 6b.

The fourth-speed gear train 7 includes a fourth-speed drive gear 7a that is installed so that it rotates relative to the input shaft 1 and a fourth-speed driven gear 7b that rotates integrally with the output shaft 2. The fourth-speed drive gear 7a is meshed with the fourth-speed driven gear 7b.

The fifth-speed gear train 8 includes a fifth-speed drive gear 8a that is installed so that it rotates relative to the input shaft 1 and a fifth-speed driven gear 8b that rotates integrally with the output shaft 2. The fifth-speed drive gear 8a is meshed with the fifth-speed driven gear 8b.

The sixth-speed gear train 9 includes a sixth-speed drive gear 9a that is installed so that it rotates relative to the input shaft 1 and a sixth-speed driven gear 9b that rotates integrally with the output shaft 2. The sixth-speed drive gear 9a is meshed with the sixth-speed driven gear 9b.

The shifting operation (speed change operation) of these shift gear trains is performed by three synchromesh mechanisms (synchro devices) 11, 12, and 13.

The first synchromesh mechanism 11 is provided on the output shaft 2 between the first-speed driven gear 4b and second-speed driven gear 5b. In other words, if the first synchromesh mechanism 11 operates at the side of the first-speed driven gear 4b, the first-speed driven gear 4b is linked to and rotates integrally with the output shaft 2, so that power is transmitted from the input shaft 1 to the output shaft 2 between the first-speed drive gear 4a and first-speed driven gear 4b (i.e., first gear is established). If the first synchromesh mechanism 11 operates at the side of the second-speed driven gear 5b, the second-speed driven gear 5b is linked to and rotates integrally with the output shaft 2, so that power is transmitted from the input shaft 1 to the output shaft 2 between the second-speed drive gear 5a and second-speed driven gear 5b (i.e., second gear is established).

The second synchromesh mechanism 12 is provided on the input shaft 1 between the third-speed drive gear 6a and fourth-speed drive gear 7a. In other words, if the second synchromesh mechanism 12 operates at the side of the third-speed drive gear 6a, the third-speed drive gear 6a is linked to and rotates integrally with the input shaft 1, so that power is transmitted from the input shaft 1 to the output shaft 2 between the third-speed drive gear 6a and third-speed driven gear 6b (i.e., third gear is established). If the second synchromesh mechanism 12 operates at the side of the fourth-speed drive gear 7a, the fourth-speed drive gear 7a is linked to and rotates integrally with the input shaft, so that power is transmitted from the input shaft 1 to the output shaft 2 between the fourth-speed drive gear 7a and fourth-speed driven gear 7b (i.e., fourth gear is established).

The third synchromesh mechanism 13 is provided on the input shaft 1 between the fifth-speed drive gear 8a and sixth-speed drive gear 9a. In other words, if the third synchromesh mechanism 13 operates at the side of the fifth-speed drive gear 8a, the fifth-speed drive gear 8a rotates integrally with the input shaft 1, so that power is transmitted from the input shaft 1 to the output shaft 2 between the fifth-speed drive gear 8a and fifth-speed driven gear 8b (i.e., fifth gear is established). If the third synchromesh mechanism 13 operates at the side of the sixth-speed drive gear 9a, the sixth-speed drive gear 9a rotates integrally with the input shaft 1, so that power is transmitted from the input shaft 1 to the output shaft 2 between the sixth-speed drive gear 9a and sixth-speed driven gear 9b (i.e., sixth gear is established).

Thus, during forward movement of the vehicle, the gear change operation is excluded, and the rotational drive power of the input shaft 1 is transmitted to the output shaft 2 via one of the first-speed to sixth-speed gear trains 4 to 9 that is selected by actuation of one of the above-described first to third synchromesh mechanisms 11, 12, and 13. The first to third synchromesh mechanisms 11, 12, and 13 are not restricted to double-cone systems, and other suitable systems may be used.

The reverse gear train 10 includes a reverse drive gear 10a that rotates integrally with the input shaft 1, a reverse driven gear 10b that rotates relative to the output shaft 2, and a reverse idler gear 10c that slides with respect to the reverse shaft. The reverse drive gear 10a, reverse driven gear 10b, and reverse idler gear 10c do not transfer power during forward movement of the vehicle. During reverse movement of the vehicle, the first to third synchromesh mechanisms 11, 12, and 13 are set in a neutral state and the reverse idler gear 10c moves along the axial direction of the reverse shaft to mesh with both the reverse drive gear 10a and the reverse driven gear 10b, whereby the rotation direction of the reverse drive gear 10a is reversed and power is thereby transmitted to the reverse driven gear 10b. As a result, the output shaft 2 rotates in the opposite direction from that during forward movement of the vehicle, and the drive wheels rotate backward accordingly. The reverse driven gear 10b rotates integrally at the outer circumferential of the first synchromesh mechanism 11.

Thus, shift or reverse rotation is performed at a predetermined gear ratio, and the rotational drive power transmitted to the output shaft 2 is reduced by a final reduction ratio of a final reduction gear train 15 that includes a final drive gear and a final driven gear and then outputted to a referential unit. As a result, the drive wheels rotate forward or backward.

FIG 2 is a schematic diagram of a shift pattern (shift gate shape) of the six-speed manual transmission of the embodiment. A shift lever L shown by a dash-dot line in FIG 2 shaped to enable a selection operation in the direction shown by arrow X in FIG. 2 and a shift operation in the direction shown by arrow Y, which is perpendicular to the selection operation direction.

A first-speed and second-speed select position P1, a third-speed and fourth-speed select position P2, a fifth-speed and sixth-speed select position P3, and a reverse select position P4 are arranged in a row along the select operation direction.

Through a shift operation (operation in the direction of arrow Y) performed in the first-speed and second-speed select position P1, it is possible to move the shift lever L from a first-speed position 1st to a second-speed position 2nd. IIf the operation is performed to the first-speed position 1st, the first synchromesh mechanism 11 operates at the side of the first-speed driven gear 4b, whereby the first-speed driven gear 4b is connected to the output shaft 2 to rotate integrally therewith. If the operation is performed to the second-speed position 2nd, the first synchromesh mechanism 11 operates at the side of the second-speed driven gear 5b, whereby the second-speed driven gear 5b is connected to the output shaft 2 to rotate integrally therewith.

Likewise, through a shift operation performed in the third-speed and fourth-speed select position P2, it is possible to move the shift lever L from a third-speed position 3rd to a fourth-speed position 4th. If the operation is performed to the third-speed position 3rd, the second synchromesh mechanism 12 operates at the side of the third-speed drive gear 6a, whereby the third-speed drive gear 6a is connected to the input shaft 1 to rotate integrally therewith. If the operation is performed to the fourth-speed position 4th, the second synchromesh mechanism 12 operates at the side of the fourth-speed drive gear 7a, whereby the fourth-speed drive gear 7a is connected to the input shaft 1 to rotate integrally therewith.

Furthermore, through a shift operation performed in the fifth-speed and sixth-speed select position P3, it is possible to move the shift lever L from a fifth-speed position 5th to a sixth-speed position 6th. If the operation is performed to the fifth-speed position 5th, the third synchromesh mechanism 13 operates at the side of the fifth-speed drive gear 8a, whereby the fifth-speed drive gear 8a is connected to the input shaft 1 to rotate integrally therewith. If the operation is performed to the sixth-speed position 6th, the third synchromesh mechanism 13 operates at the side of the sixth-speed drive gear 9a, whereby the sixth-speed drive gear 9a is connected to the input shaft 1 to rotate integrally therewith.

Through a shift operation in the reverse select position P4, it is possible to move the shift lever L to a reverse position REV. If the operation is performed to the reverse position REV, all the synchromesh mechanisms 11, 12, and 13 assume a neutral state, and the reverse idler gear 10c moves along the axial direction of the reverse shaft to mesh with the reverse driven gear 10b and reverse drive gear 10a.

A shift select mechanism for selectively transmitting an operation force of the shift lever L, which serves to establish the forward first-gear to forward sixth-gear and the reverse stage through the above-described operations, to the first to third synchromesh mechanisms 11, 12, and 13 or reverse idler gear 10c will be described below.

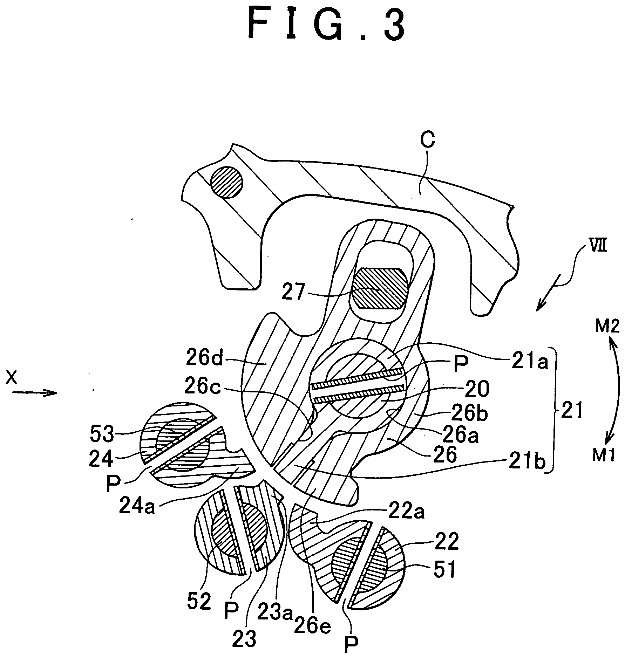

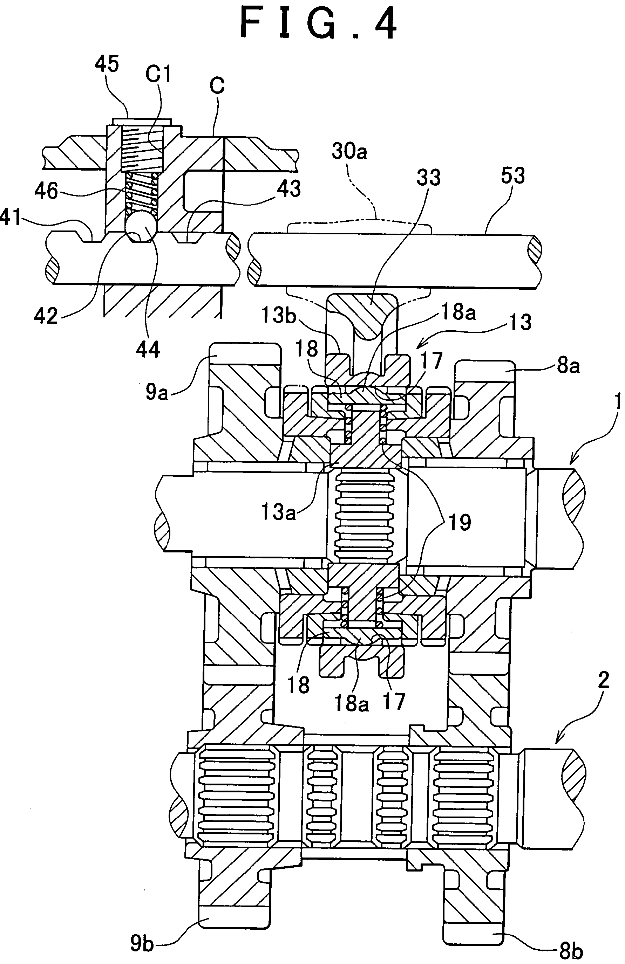

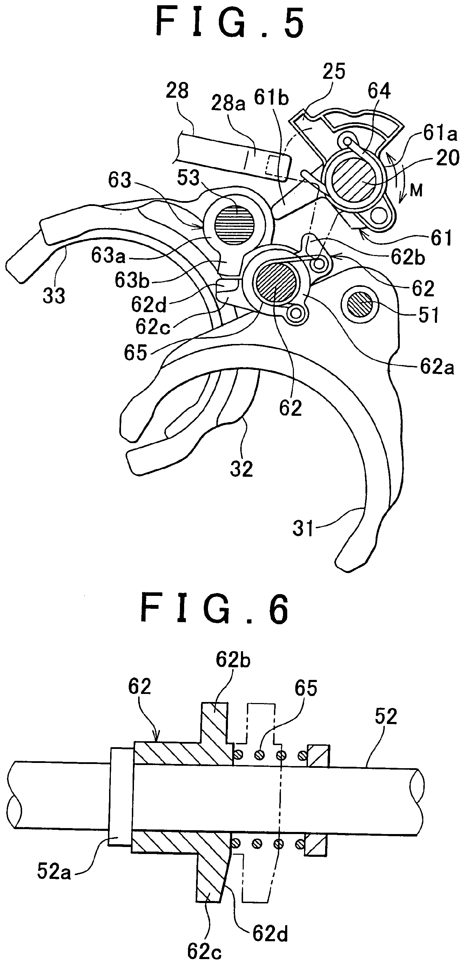

FIG 3 is a cross-sectional view, along the axial direction of a shift select shaft 20, of forward-gear engagement portions 22, 23, and 24 and peripheral portions thereof in the shift select mechanism. In FIG 3, the forward-stage first-gear and second-gear engagement portion 22, provided at a first-gear and second-gear fork shaft 51, the third-gear and fourth-gear engagement portion 23, provided at a third-gear and fourth-gear fork shaft 52, and the fifth-gear and sixth-gear engagement portion 24, provided at a fifth-gear-and sixth-gear fork shaft 53, are arranged side by side. FIG 4 is a cross-sectional view of an engagement portion of the fifth-gear and sixth-gear fork shaft 53 and the third synchromesh mechanism 13. FIG 5 is a cross-sectional view, in the axial direction of a shift select shaft 20, of shift forks 31, 32, and 33 provided on fork shafts 51, 52, and 53, respectively.

As shown in these figures, in the shift select mechanism, the shift lever L is connected so that operation force of the shift lever L is transmitted to the shift select shaft 20 (see FIGS. 3 and 5) through a select cable and a shift cable (not shown in the figure). As a result, the shift select shaft 20 rotates about the shaft axis (direction shown by arrows M1 and M2 in FIGS. 3 and 5) in response to the select operation of the shift lever L and slides along the axial direction (direction perpendicular to the main plane in FIGS. 3 and 5) in response to the shift operation of the shift lever L. Thus, a select operation force (operation force in the direction shown by arrow X in FIG 2) acting upon the shift lever L is transmitted via the select cable as a torque about the axis of the shift select shaft 20, and a shift operation force (operation force in the direction shown by arrow Y in FIG 2) acting upon the shift lever L is transmitted via the shift cable as a sliding movement force in the axial direction of the shift select shaft 20. A select inner lever 27 shown in FIG 3 receives the select operation force of the shift lever L via the select cable and to impart the torque about the axis to the shift select shaft 20.

A sleeve 13a (see FIG 4) provided at each of the first to third synchromesh mechanism 11, 12, and 13 engages with a shift fork 33 provided correspondingly thereto (FIG 4 shows only the fifth-gear and sixth-gear shift fork 33, from among the three shift forks 31, 32, and 33), and parts of these shift forks 33 are supported by a forward-gear fork shaft 53 provided correspondingly thereto (FIG 3 shows only the fifth- and sixth-speed fork shaft 53, from among the three fork shafts 51, 52, and 53). By the rotation about the axis of the shift select shaft 20 in response to the select operation of the shift lever L, one fork shaft 53 (51, 52) is selected to enable the transmission of a shift operation force, and the one fork shaft 53 (51, 52) selected by the sliding movement of the shift select shaft 20 in response to the shift operation of the shift lever L slides in the axial direction, and the predetermined one synchromesh mechanism 13 (11, 12) is actuated via the one shift fork 33 (31, 32) provided at the fork shaft 53 (51, 52).

As shown in FIG. 3, the shift inner lever 21 for selecting one fork shaft 52 (51, 53) has a tubular portion (base portion) 21a fixed to the outer circumference of the shift select shaft 20 and an arm portion 21b extending radially from the tubular portion 21a. Furthermore, an engagement pin P is inserted from the shift select shaft 20 along the tubular portion 21a, and the shift inner lever 21 is integrally rotationally and slidably connected to the shift select shaft 20.

An interlock plate (interlock member) 26 is mated with the tubular portion 21a of the shift inner lever 21 so that the interlock plate moves in the axial direction, but cannot rotate about the axis relative to the tubular portion. A groove 26c serving as an engagement piece passage and composed of a pair of opposing guiding surfaces that contact both sides in the rotation direction of the arm portion 21b of the shift inner lever 21 is formed in the interlock plate 26. The groove 26c extends in the axial direction. A space between the guiding surfaces of the groove 26c is set to control the simultaneous passage of a plurality of heads 22a, 23a, and 24a that engage with the arm portion 21b of the shift inner lever 21 and move in the axial direction, namely, to allow only one head 23a (22a, 24a) to pass. The interlock plate 26 moves in the axial direction relative to the tubular portion 21a of the shift inner lever 21, but cannot move in the axial direction with respect to the transmission case..

Furthermore, if the shift lever L is selected in the select direction shown by arrow X in FIG. 2, the operation force thereof is transmitted by the select cable to the shift select shaft 20 via the select inner lever 27, and the shift select shaft 20 rotates and assumes a rotation position corresponding to the operation position of the shift lever L. FIG 3 shows the rotation positions of the shift select shaft 20 and shift inner lever 21 at the time the shift lever L was operated to the third-gear and fourth-gear select position P2.

If the shift lever L is shift operated in the shift direction shown by arrow Y in FIG 2, the operation force thereof is transmitted to the shift select shaft 20 by the shift cable, and the shift select shaft 20 slides in the axial direction (direction perpendicular to the main plane in FIG 3) and assumes a slide position corresponding to the operation position of the shift lever L.

Forward-gear engagement portions 22, 23, and 24 each having a pair of heads (forward-gear engagement pieces) 22a, 23a, and 24a, disposed on both sides in the axial direction, that sandwich the rotation path of the arm portion 21b of the shift inner lever 21 are provided at the fork shafts 51, 52, and 53 (in FIG 3, the first-gear and second-gear fork shaft 51, third-gear and fourth-gear fork shaft 52, and fifth-gear and sixth-gear fork shaft 53 are shown; in FIG. 4, only the fifth-gear and sixth-gear fork shaft 53 is shown) provided correspondingly to the first to third synchromesh mechanisms 11, 12, and 13. Engagement pins P pass through from the fork shafts 51, 52, and 53 along the forward-gear engagement portions 22, 23, and 24, and the forward-gear engagement portions 22, 23, and 24 are configured to move integrally with the fork shafts 51, 52, and 53.

The heads 22a, 23a, and 24a are disposed in positions in which the arm portion 21b of the shift inner lever 21 may be selectively engaged in response to the select operation, and the selected heads 22a, 23a, and 24a are engaged and moved in the axial direction of the shift select shaft 20 by the arm portion 21b.

The movement from the central positions of pairs of heads 22a, 22a, 23a, 23a, and 24a, 24a in the aforementioned axial direction, that is, the movement from the central positions of forward-gear engagement portions 22, 23, and 24 having the pairs of heads 22a, 22a, 23a, 23a, and 24a, 24a, is performed in response to the execution of operations of the first to third synchromesh mechanisms 11, 12, and 13, respectively, and subsequent shifting to a forward stage.

Further, as shown in FIG 5, a reverse lever 25 is provided that rotates and slides integrally with the shift select shaft 20. A reverse arm (rearward-stage shift member) 28 including a reverse head 28a is provided adjacent to the reverse lever 25 on a rotation trajectory thereof realized when the shift select shaft 20 rotates. In the reverse arm 28, the distal end portion, opposite the side where the reverse head 28a is formed, engages with the reverse idler gear 10c. As a result, when the shift lever L is select operated to reach the reverse select position P4 in FIG 2, the reverse lever 25 rotates to a position corresponding to that of the reverse head 28a (see virtual line in FIG 5). When the shift lever L is shift operated from this state to the reverse position REV, for example, the reverse lever 25 moves in the depth direction of the sheet in FIG 5 and the reverse lever 25 abuts against the reverse head 28a and moves the reverse arm 28 in the direction along the axial line of the shift select shaft 20. As a result, the reverse idler gear 10c moves in the axial direction of the reverse shaft to engage the reverse drive gear 10a and reverse driven gear 10b.

When the shift lever L is in a neutral position (in this embodiment, the third-speed and fourth-speed select position P2) and none of the shift stages is established, the arm portion 21b of the shift inner lever 21 is also in the neutral position in the axial direction and rotation direction, and the heads 22a, 22a, 23a, 23a, 24a, and 24a are disposed adjacently along both sides of the rotation path of the arm portion 21b.

The arm portion 21b of the shift inner lever 21 then rotates in response to the rotation of the shift select shaft 20 correspondingly to the select position of the above-described shift lever L and is selectively disposed in a position in which it may engage with the heads 22a, 23a, and 24a that are disposed in the rotation positions corresponding to the select position of the shift lever L. For example, if the shift lever L is operated to the first-gear and second-gear select position P1, the arm portion 21b of the shift inner lever 21 is disposed to engage with the head 22a of the forward-stage engagement portion 22 provided at the first-gear and second-gear fork shaft 51. Likewise, if the shift lever L is operated to the third-gear and fourth-gear select position P2, the arm portion 21b of the shift inner lever 21 is disposed to engage with the head 23a of the forward-stage engagement portion 23 provided at the third-gear and fourth-gear fork shaft 52, and if the shift lever L is operated to the fifth-gear and sixth-gear select position P3, the arm portion 21b of the shift inner lever 21 is disposed to engage with the head 24a of the forward-stage engagement portion 24 provided at the fifth-gear and sixth-gear fork shaft 53. If the shift lever L is operated to the reverse select position P4, the shift select shaft 20 rotates in the counterclockwise direction, as shown in FIG. 5, and the reverse lever 25 is disposed to engage with the reverse head 28a of the reverse arm 28.

Because the arm portion 21b of the shift inner lever 21 is thus disposed so that it may be engaged with any of the forward-gear head 23a (22 a, 24 a), the fork shaft 52 (51, 53) is selected so that it can transmit the operation force. Furthermore, the reverse lever 25 is disposed so that it can be engaged with the reverse head 28a of the reverse arm.

When shift lever L is operated in the shift direction from this state, the operation force of the shift lever L is transmitted to the shift select shaft 20 by the shift cable. As a result, the shift select shaft 20 slides in the axial direction thereof. Furthermore, if the arm portion 21b of the shift inner lever 21 engages any of the (forward-gear) head 23a (22a, 24a), the forward-gear engagement portion 23 (22, 24) on which the head 23a (22a, 24a) is provided and the fork shaft 52 (51, 53), which moves in response to the movement thereof, is caused to slide together with the engaged head 23a (22a, 24a), whereby the synchromesh mechanism 12 (11,13) is actuated.

Furthermore, if the reverse lever 25 is engaged with the reverse head 28a, the reverse arm 28 is caused to slide in the axial direction together with the reverse head 28a, whereby the reverse arm 28 causes the reverse idler gear 10c to move in the axial direction of the reverse shaft.

For example, in a case where the shift lever L is shift operated to the third-speed position 3rd from a state in which the arm portion 21b of the shift inner lever 21 is disposed to engage with the head 23a of the forward-stage engagement portion 23 provided at the third-speed and fourth-speed fork shaft 52, as shown in FIG 3, the shift select shaft 20 moves in the depth direction of the sheet in FIG 3 and the arm portion 21b, forward-stage engagement portion 23, third-speed and fourth-speed fork shaft 52, and third-speed and fourth-speed shift fork 32 move accordingly in the same direction, whereby the second synchromesh mechanism 12 is actuated to the side of the third drive gear 6a and a third-stage shift is established. In a case where the shift lever L is shift operated to the fourth-speed position from the state shown in FIG 3, the shift select shaft 20 moves forward from the sheet in FIG 3 and the arm portion 21b, forward-stage engagement portion 23, third-speed and fourth-speed fork shaft 52, and third-speed and fourth-speed shift fork 32 move accordingly in the same direction, whereby the second synchromesh mechanism 12 is actuated to the side of the fourth drive gear 7a and a fourth-stage shift is established.

FIG 4 is a cross-sectional view illustrating an engagement portion of the xv and sixth-gear fork shaft 53 and third synchromesh mechanism 13. As shown in the figure, the shift fork 33 is attached via a link portion 30a, shown by a two-dot - dash line, to the fork shaft 53 and engages with the sleeve 13a of the third synchromesh mechanism 13 from the distal end portion of the shift fork 33.

Three lock ball grooves 41, 42, and 43 corresponding to the fifth-gear stage, neutral position, and sixth-gear stage, respectively, are formed in the fork shaft 53, and one lock ball 44 pressed against the fork shaft 53 is selectively mated with one of the lock ball grooves 41, 42, and 43. The lock ball 44 is accommodated inside an orifice C1 formed in a transmission case C and pressed against the fork shaft 53 by a compressed coil spring 46 locked by a plug 45 accommodated in the same orifice C1. Such a configuration prevents the gears from disengaging and creates a feel of moderate movement.

Where the fork shafts 51, 52, and 53 provided with the forward-gear engagement portions 22, 23, and 24, respectively, move slightly in the axial direction from the above-described neutral positions, the lock ball 44 is pressed against the lock ball groove 42, thereby creating a neutral position restoration force that acts upon the fork shaft 53 and the forward-stage engagement portions 22, 23, and 24 (heads 22a, 23a, and 24a) fixed thereto so as to restore the neutral position, as long as the lock ball 44 does not completely separate from the lock ball groove 42.

Furthermore, as shown in FIG 4, in the third synchromesh mechanism 13, a plurality of synchronizer keys 18 are provided equidistantly in the circumferential direction on the outer peripheral side of a synchronizer hub 17. A protrusion 18a protrudes from the outer circumferential side in the central portion of each synchronizer key 18 and engages with a circumferential groove 13b formed at the inner circumferential surface of the sleeve 13a. The synchronizer key 18 is pressed against the inner circumferential surface of the sleeve 13a by a key spring 19 provided inside the synchronizer hub 17. With such a configuration, similar to the mechanism including the lock ball 44, where the heads 22a, 23a, and 24a and the fork shaft 53 move slightly in the axial direction from the above-described neutral positions, the synchronizer key 18 is pressed against the inner circumferential surface of the sleeve 13a, thereby creating a neutral position restoration force that acts upon the sleeve 13a restore the sleeve 13a to the neutral position, as long as the protrusion 18a of the synchronizer key 18 does not completely separate from the groove 13b formed in the inner circumferential surface of the sleeve 13a.

The engagement portion of the first-gear and second-gear fork shaft 51 and the first synchromesh mechanism 11, and the engagement portion of the third-gear and fourth-gear fork shaft 52 and the second synchromesh mechanism 12 have similar configurations.

A gear knocking sound preventing device of the manual transmission system will be explained below. FIG 5 is a cross-sectional view, from the axial direction of the shift select shaft, of the gear knocking sound preventing device, shift forks, and peripheral portions thereof. This gear knocking sound preventing device prevents the occurrence of reverse shift gear knocking sound. The device actuates a synchromesh mechanism (for example, the third synchromesh mechanism 13, which is actuated to establish sixth-gear) during a reverse shift operation, sufficiently reduces the rotational speed of or stops the input shaft 1, and then links the input shaft 1 with output shaft 2. In this example, a gear knocking sound preventing device is described in which the gear knocking sound is prevented by actuating the third synchromesh mechanism 13. However, a synchromesh mechanism other than the third synchromesh mechanism 13 used for gear knocking sound prevention may be.

As shown in FIG. 5, a gear knocking sound preventing device includes a first head (first head member) 61 provided at the select shift shaft 20, a second head (intermediate head member) 62 provided at the third-gear and fourth-gear fork shaft 52, and a third head (head member for pre-balk) 63 provided at the fifth-gear and sixth-gear fork shaft 53. The heads 61, 62, and 63 are provided in positions at a predetermined distance from the position of the shift select mechanism in the axial direction of the shift select shaft 20 and at apart from the position of the shift inner lever 21 or the select shift mechanism constituted by the forward-stage engagement portions 22, 23, and 24.

The first head 61 is provided integrally with the shift select shaft 20. In other words, the first head 61 rotates in accordance with the rotation of the shift select shaft 20 and moves in the axial direction of the shift select shaft, following the sliding movement of the shift select shaft 20 in the axial direction. In other words, the first head 61 rotates in the same direction as the shift select shaft 20, in accordance with the rotation of the shift select shaft 20, which follows the select position (operation in the direction of arrow X in FIG 2) of the shift lever L and moves in the same axial direction as the shift select shaft 20, following the sliding movement of the shift select shaft 20 in the axial direction that follows the shift operation (operation in the direction of arrow Y in FIG 2) of the shift lever L.

In the embodiment, if the shift lever L is select operated from the vand fourth-gear select position P2 toward the fifth-gear and sixth-gear select position P3, the shift select shaft 20 and the first head 61 rotate clockwise, as shown in FIG 5. Conversely, if the shift lever L is select operated from the third-gear and fourth-gear select position P2 toward the reverse select position P4, the shift select shaft 20 and the first head 61 rotate counterclockwise, as shown in FIG 5.

In addition, a cylindrical sleeve 61a that surrounds the outer circumference of the shift select shaft 20 and a pushing hook 61b that extends outwardly from part of the outer circumferential surface of the sleeve portion 61a are provided at the first head 61. The pushing hook portion 61b has an almost trapezoidal shape, as viewed from the axial direction of the shift select shaft 20 (shape shown in FIG. 5), that narrows down toward the outer circumferential side. Of the positions of the pushing hook portion 61b shown in FIG 5, the position shown by a solid line indicates a state in which the shift lever L is in the third-gear and fourth-gear select position P2, and the position shown by a two-dot - dash line indicates a state in which the shift lever L is in the reverse select position P4. In other words, when the shift lever L is select operated from the third-gear and fourth-gear select position P2 to the reverse select position P4, the pushing hook portion 61b rotates from the position shown by the solid line in the figure to the position shown by the two-dot - dash line.

A coil spring 64 is wound about the shift select shaft 20, and a bias force in the circumferential direction of the coil spring 64 places a limitation on the operation force in the rotation direction that acts on the shift select shaft 20.

The second head 62 is provided so that is can both rotate and move in the axial direction relative to the third-gear and fourth-gear fork shaft 52. In other words, the second head 62 can rotate independently of the third-gear and fourth-gear fork shaft 52 and also can move in the axial direction independently of the third-gear and fourth-gear fork shaft 52.

A cylindrical sleeve 62a surrounds the outer circumference of the third-gear and fourth-gear fork shaft 52, a pressure-receiving hook 62b that extends to the outer circumferential side from part of the outer circumferential surface of the sleeve 62a, and a pressing hook 62c for pre-balk that also extends to the outer circumferential side from part of the outer circumferential surface of the sleeve 62a are provided at the second head 62.

FIG 6 is a side view of the third-gear and fourth-gear fork shaft 52 located in the vicinity of the installation position of the second head 62. As shown in FIG. 6, a stopper 52a for controlling the position of the second head 62 on the third-gear and fourth-gear fork shaft 52 is formed at the third-gear and fourth-gear fork shaft 52. The stopper 52a prevents the second head 62 from moving to the left (depth direction perpendicular to the sheet surface in FIG 5) in FIG 6. Therefore, in a position in which the second head 62 abuts against the stopper 52a (hereinafter, this position will be referred to below as the "initial position of the second head 62 in the axial direction"), further movement to the left, as shown in FIG 6, is prevented whereas movement to the right (forward direction perpendicular to the sheet surface in FIG 5), as shown in FIG 6, is allowed.

Thus, when the second head 62 abuts against the stopper 52a, the pressure-receiving hook 62b is positioned to receive the pressing force from the pressing hook 61b when the first head 61 rotates (rotation in the counterclockwise direction in FIG. 5). In other words, these pressing hook 61b of the first head 61 and the pressure-receiving hook 62b of the second head 62 are disposed to face each other on a virtual plane that extends in the direction perpendicular to the axial direction of the shift select shaft 20 and third-gear and fourth-gear fork shaft 52.

Furthermore, the pressing hook portion 62c for pre-balk of the second head 62 is formed in a position separated by an angle of 180° in the circumferential direction of the second head 62 from the position of the pressure-receiving hook 62b. In other words, the pressing hook 62c is formed in a position on the side opposite where the pressure-receiving hook 62b is formed. A tapered surface 62d that inclines in the depth direction of the sheet surface in FIG 5 is formed at the surface of the pressing hook 62c toward the downstream side in the rotation direction (clockwise direction in FIG. 5) in the case of rotation resulting from reception of the pressing force from the pressing hook portion 61b of the first head 61.

A coil spring (biasing portion) 65 that imparts a bias force to the second head 62 is wound about the third-gear and fourth-gear fork shaft 52. The biasing force of the coil spring 65, acts in the direction opposite that of the pressing force in the rotation direction that is received from the pressing hook 61b of the first head 61 is applied to the second head 62. In other words, when the second head 62 does not receive a pressing force from the pressing hook 61b of the first head 61 or when the pressing force is released, the second head 62 is returned to the initial position (position shown in FIG 5; this position will be referred to hereinafter as the "initial position in the rotation direction of the second head 62") by the biasing force of the coil spring 65.

Furthermore, the coil spring 65 also applies a biasing force in the axial direction to the second head 62. More specifically, a biasing force is applied in the direction that causes the second head 62 to abut against the stopper 52a (direction toward the initial position in the axial direction), and if no force in the axial direction, other that the biasing force from the coil spring 65, acts upon the second head 62, the state of abutment against the stopper 52a is maintained (see the solid line in FIG 6). Furthermore, when an outer force acting to the right in FIG 6 (forward direction perpendicular to the sheet surface in FIG 5) acts, the second head 62 is moved by the outer force (see a two-dot - dash line in FIG 6) against the biasing force of the coil spring 65 to the right in FIG 6 (forward direction perpendicular to the sheet surface in FIG 5).

The third head 63 is provided integrally with the fifth-gear and sixth-gear fork shaft 53. In other words, the third head 63 follows the sliding movement of the fifth-gear and sixth-gear fork shaft 53 in the axial direction. In other words, together with the sliding movement of the fifth-gear and sixth-gear fork shaft 53 in the axial direction as the result of fifth-gear or sixth-gear shift operation, the third head 63 moves in the same axial direction.

Furthermore, a cylindrical sleeve 63a surrounding the outer circumference of the fifth-gear and sixth-gear fork shaft 53 and a pressure-receiving hook 63b for pre-balk that extends outward from the outer circumferential surface of the sleeve portion 63 are provided at the third head 63. The pressure-receiving hook 63b for pre-balk is formed opposite the pressing hook 62c. In other words, the pressure-receiving hook 63b for pre-balk is formed in a position such that where the second head 62 receives the pressing force from the pressing hook 61b of the first head 61 and rotates, the tapered surface 62d formed in the pressing hook 62c comes into contact with the pressure-receiving hook 63b. Furthermore, a pressure-receiving surface 63c is formed as an inclined surface in the pressure-receiving hook portion 63b for pre-balk and faces the taper surface 62d in the pressing hook portion 62c. As a result, when the second head 62 rotates and the taper surface 62d formed in the pressing hook portion 62c for pre-balk applies a pressing force to the pressure-receiving surface 63c formed in the pressure-receiving hook portion 63b, a component of the pressing force from the second head 62 acts in the direction along the axis of the third head 63 and the third head 63 slides together with the fifth-gear and sixth-gear fork shaft 53 in the axial direction, thereby making it possible to actuate the third synchronizer mechanism and stop the rotation of the input shaft.

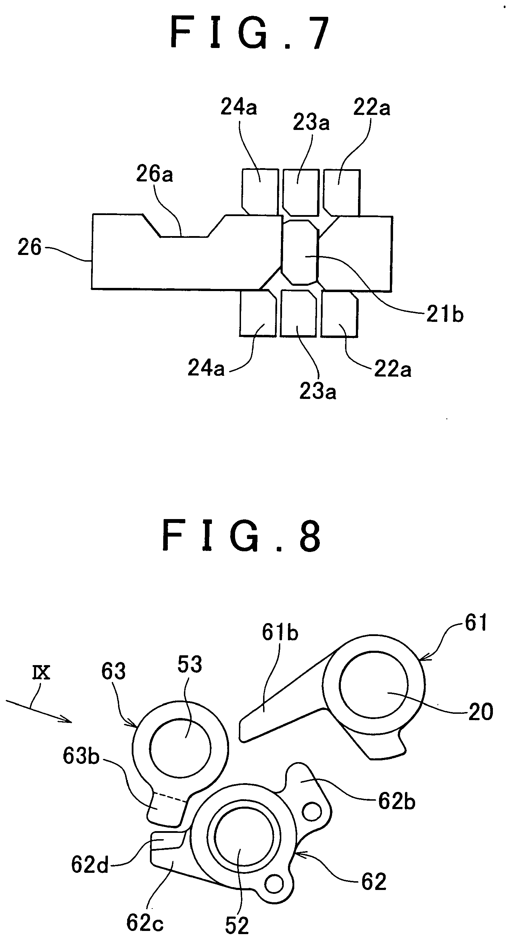

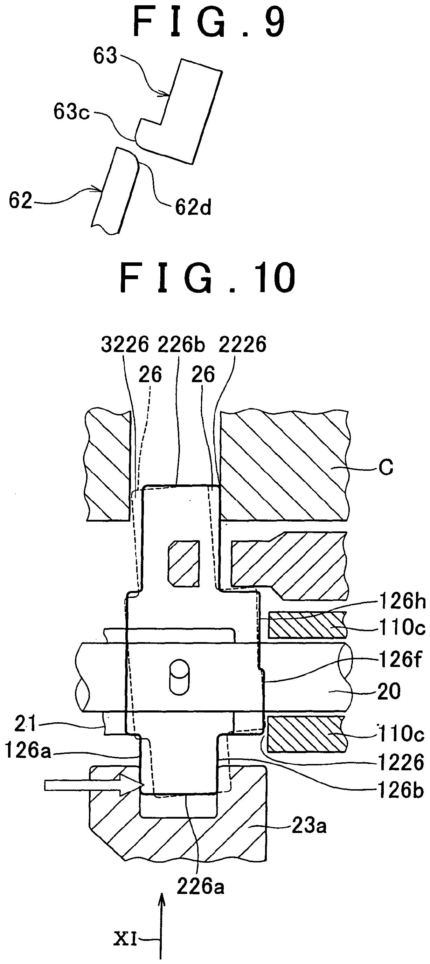

FIG 7 is a view of an interlock plate from the direction shown by arrow VII in FIG 3. FIG 8 is a view of a gear knocking sound preventing device from the axial direction of the shift select shaft. FIG 9 is a side view from the direction shown by arrow IX in FIG 8.

As shown in FIGS. 7 to 9, a concave portion 26a is provided in the interlock plate 26. The concave portion 26a serves to mate with the head 24a during the reverse shift and to allow the head 24a to move in the axial direction. FIGS. 7 to 9 show a state before the reverse shift operation. In this state, the heads 61, 62, and 63 are disposed at a predetermined distance from each other, rather than in contact with each other. In other words, in this state, no operation force is transmitted between the heads 61, 62, and 63.

FIG 10 is a side view of the interlock plate from the direction shown in arrow X in FIG 3. Referring to FIG 10, the interlock plate 26 is disposed so as to cross the shift select plate 20. One end 126a and the other end 126b of the interlock plate 26 are provided opposite each other in the axial direction of the shift select shaft 20. The side of the other end 126b has a shape that can abut against the boss portion 110c. A first end portion 226a and a second end portion 226b of the interlock plate 26 are positioned opposite each other so as to sandwich the shift select shaft 20. The first end portion 226a is positioned on the side of the head 23a, and the second end portion 226b is positioned so as to abut against the wall surface of the transmission case C.

The position shown by the dot line in FIG 10 indicates a schematic position of the interlock plate 26 when the interlock plate 26 is inclined. Pressure from the head 23a may be applied to the interlock plate 26, and the force of the pressure tends to incline the interlock plate 26. However, the inclination is inhibited by the abutment of the transmission case C, boss portion 110c, and interlock plate 26.

As shown in FIG 10, a protruding portion 126f is provided on the interlock plate 26. The protruding portion extends in the axial direction of the shift select shaft 20, toward the boss portion 110c that supports the shift select shaft 20. Therefore, the boss portion 110c and protruding portion 126f may easily come into contact with each other. The protruding portion 126f protrudes further toward the boss portion 110c than a flat portion 126h. As a result, the distance between the boss portion 110c on the side near the head 23a and the protruding portion 126f, which has an end surface perpendicular to the shift select shaft 20, is less than the distance between the boss portion 110c on the side that is away from the head 23a and the flat portion 126h.

The adjustment of a clearance 1226 between the interlock plate 26 and boss portion 110c and clearances 2226 and 3226 between the transmission case C and interlock plate 26, brings the interlock plate 26 into contact with the transmission case C and then brings the interlock plate 26 into contact with the boss portion 110c. The second end portion 226b, which is inherently positioned to abut against the transmission case C, is caused to abut against the transmission case C, and a load that cannot be supported thereby is supported by the abutment portion of the boss portion 110c and interlock plate 26. As a result, the inclination caused by application of pressure from the head 23a may be inhibited without increasing the size of the interlock plate 26 in the direction perpendicular to the axial line of the shift select shaft 20, that is, while minimizing the increase in weight of the interlock plate.

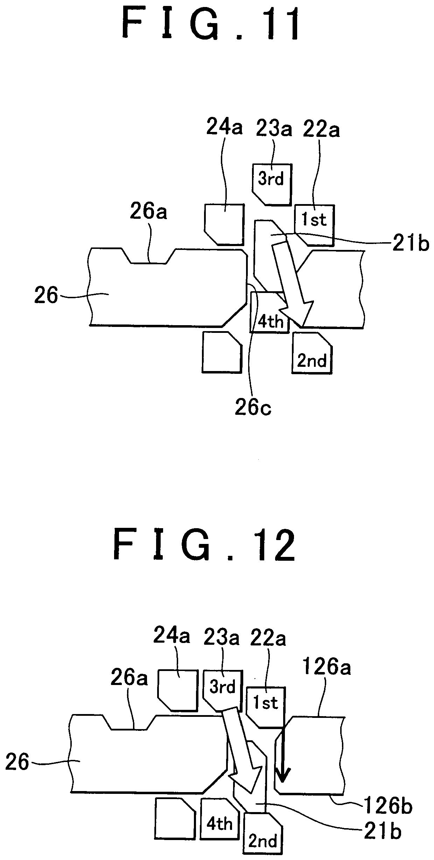

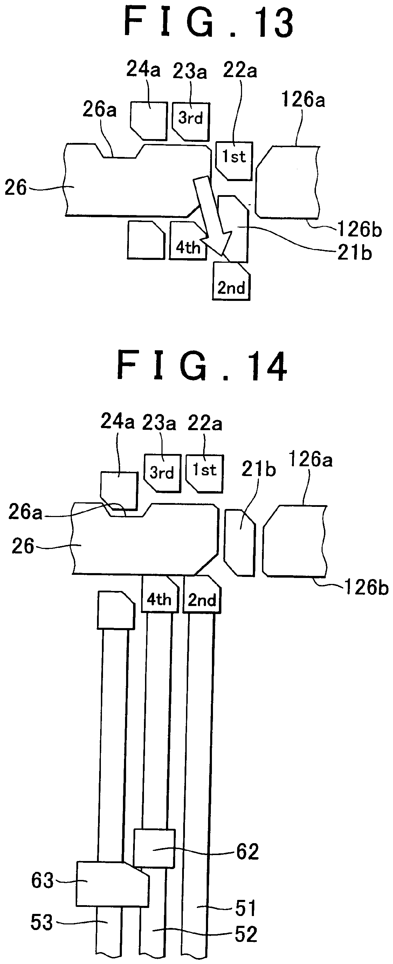

FIGS. 11 to 13 illustrate the operation of the inner lever as viewed from the direction shown by arrow XI in FIG 10. Referring to FIG 11, a force may be applied to the interlock plate 26 when shifting from the third gear to the second gear. More specifically, in the state shown in FIG. 11, shifting has been performed to the third gear. If shifting is performed from this state to the second gear, the arm portion 21b of the inner lever has to be engaged from the state shown in FIG. 1 to the head 22a. In this case, as shown by an arrow in FIG 11, a kinetic component in the shift direction and a kinetic component in the select direction are applied to the arm portion 21b. Thus, as shown in FIG 12, in a process in which the arm portion 21b moves, the head 23a applies pressure to the interlock plate 26. The head 22a also applies pressure to the interlock plate 26. Thus, only one head may pass into the groove 26c of the interlock plate 26, but if two heads cannot pass into the groove, as shown in FIG 12, each head applies pressure to the interlock plate 26. As a result, the interlock plate is pushed and inclined. As shown in FIG 13, when the shift operation is completed, the head 22a passes through the groove 26c, thereby completing the operation of shifting to the second gear.

FIG 14 shows the application of force to the interlock plate in another situation. Referring to FIG 14, when the above-described pre-balk operation is performed, the head 23a may apply pressure to the interlock plate 26. As a result, a variety of forces act from the heads on the interlock plate 26. However, in the structure of the first embodiment, because the interlock plate 26 abuts against the case in a plurality of locations, the interlock plate 26 is prevented from inclining.

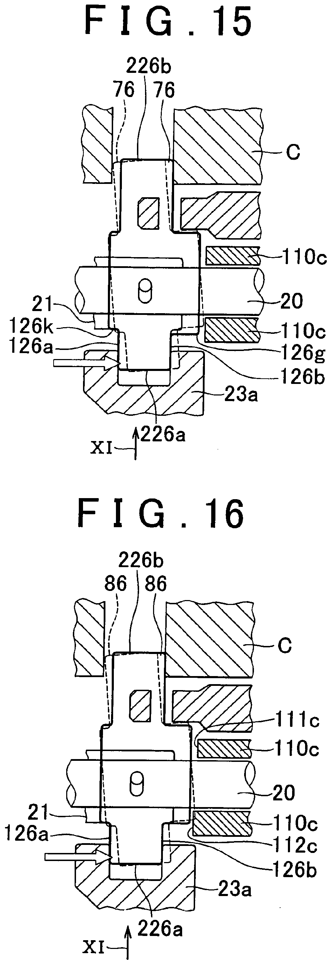

FIG 15 is a side view of an interlock plate 76 of the second embodiment of the invention. The interlock plate 76 of this embodiment differs from the interlock plate 26 shown in FIG 10 in that a protruding portion 126g extending toward the head 23a is provided. The protruding portion 126g having an end surface parallel to the shift select shaft 20 extends toward the head 23a farther than a flat portion 126k. A portion of the interlock plate 76 on the side close to a boss portion 110c extends to the head 23a, thereby facilitating the contact of the protruding portion 126g that extends in the radial direction with the boss portion 110c and making it possible to prevent the interlock plate 76 from inclining.

FIG 16 is a side view of an interlock plate 86 of the third embodiment of the invention. In the third embodiment, as shown in FIG 16, a distal end portion 112c of a boss portion 110c near the head 23a is formed to be closer to the interlock plate 86 than a distal end portion 111c of the boss portion 110c away from the head 23a. By thus forming the distal end portion 112c, it is possible to facilitate the abutment of the distal end portion 112c and the boss portion 110c and prevent the interlock plate 86 from inclining.

The transmission of the first embodiment of the invention includes the interlock plate 26 and the transmission case C. The groove 26c that receives a head is provided in the interlock plate 26. The interlock plate 26 near the groove may abut against the transmission case C. If the head 23a applies pressure to the side of one end 126a of the groove 26c, part of the interlock plate 26 on the other end 126b abuts against the boss portion 110c.

The shift select shaft 20 is not limited to one that is operated manually, but may be also one that is operated by an actuator. Furthermore, the shift lever may alternatively be provided on the steering column or on a floor panel.

Furthermore, two or three of the protruding portion 126f shown in FIG 10, protruding portion 126g shown in FIG 15, and distal end portion 112c shown in FIG 16 may be combined together. As a result, the inclination of interlock plate 26 may be prevented more effectively.

While some embodiments of the invention have been described above, it is to be understood that the invention is not restricted to details of the described embodiments, but may be embodied with various changes, modifications or improvements, which may occur to those skilled in the art, without departing from the scope of the invention.

## Claims

1. A transmission comprising:
a case (C);
an interlock plate (26) that is provided inside the case and is provided with a groove (26c) that receives an inner lever (21), wherein
the inner lever can move along an extension direction of the groove, and
when a shift head (23a) applies pressure to part of the interlock plate on a side of one end (126a) of the groove, part of the interlock plate on a side of the other end (126b) of the groove abuts against the case, **characterized in that**:
the case has a boss portion (110c) that is formed so as to extend toward the interlock plate on the other end side of the groove and supports a shift select shaft,
part of the interlock plate on the other end side of the groove is a protruding portion that protrudes in the axial direction of the shift select shaft toward the boss portion, and a distance between a portion (126f)
of the protruding portion on the side that is close to the shift head and the boss portion is less than a distance between a portion of the protruding portion (126h) on the side that is far from the shift head and the boss portion.

2. The transmission according to claim 1, wherein the interlock plate can rotate about a shift select shaft axis, and wherein a second end (226b) of the interlock plate located on a side opposite, via the shift select shaft, a first end (226a) of the interlock plate in which the groove is provided can abut against the case.

3. The transmission according to claim 2, wherein the groove extends in an axial direction of the shift select shaft.

4. The transmission according to claim 2, wherein a clearance between the interlock plate and the case is adjusted so that when the shift head applies pressure to the interlock plate near one end side of the groove, the second end of the interlock plate abuts against a portion other than the boss portion of the case, and then the protruding portion abuts against the boss portion.

5. The transmission according to any one of claims 1 or 4, wherein part of the interlock plate extends to the shift head side.

6. The transmission according to any one of claims 1, 4 or 5, wherein the boss portion is formed so that a side, which is close to the shift head, is closer to the interlock plate than a side, which is far from the shift head.

7. A transmission comprising:
a case (C);
an interlock plate (26) that is provided inside the case and is provided with a groove (26c) that receives an inner lever (21) wherein the interlock plate can rotate about the axis of a shift select shaft (20), wherein
the inner lever can move along an extension direction of the groove, and
when a shift head (23a) applies pressure to part of the interlock plate on a side of one end (126a) of the groove, part of the interlock plate on a side of the other end (126b) of the groove abuts against the case, **characterized in that**:
the case has a boss portion (110c) that is formed so as to extend toward the interlock plate on the other end side of the groove and receives the shift select shaft, and
part of the interlock plate extends to the shift head side (23a)

8. A transmission comprising:
a case (C);
an interlock plate (26) that is provided inside the case and is provided with a groove (26c) that receives an inner lever (21), wherein
the inner lever can move along an extension direction of the groove, and
when a shift head (23a) applies pressure to part of the interlock plate on a side of one end (126a) of the groove, part of the interlock plate on a side of the other end (126b) of the groove abuts against the case, **characterized in that**:
the case has a boss portion (110c) that is formed so as to extend toward the interlock plate on the other end side of the groove and supports a shift select shaft, and
the boss portion is formed so that a side, which is close to the shift head, is closer to the interlock plate than a side, which is far from the shift head.

## Patentansprüche

1. Getriebe, mit:
einem Gehäuse (C);
einer Verriegelungsplatte (26), die im Gehäuse vorgesehen ist und eine Nut (26c) zur Aufnahme eines Innenhebels (21) aufweist, wobei
sich der Innenhebel entlang der Erstreckungsrichtung der Nut bewegen kann, und
wenn ein Schaltkopf (23a) auf einen Teil der Verriegelungsplatte auf der Seite eines Endes (126a) der Nut Druck ausübt, ein Teil der Verriegelungsplatte auf der Seite des anderen Endes (126b) der Nut am Gehäuse anliegt, **dadurch gekennzeichnet, dass**:
das Gehäuse einen Nabenabschnitt (110c) hat, der so ausgebildet ist, dass er sich auf der Seite des anderen Endes der Nut in Richtung der Verriegelungsplatte erstreckt und eine Schaltauswahlwelle lagert,
ein Teil der Verriegelungsplatte auf der Seite des anderen Endes der Nut ein hervorstehender Abschnitt ist, der in Axialrichtung der Schaltauswahlwelle in Richtung des Nabenabschnitts hervorsteht, und
ein Abstand zwischen einem Abschnitt (126f) des hervorstehenden Abschnitts auf der Seite, die nahe am Schaltkopf und dem Nabenabschnitt liegt, kürzer ist als ein Abstand zwischen einem Abschnitt des hervorstehenden Abschnitts (126h) auf der Seite, die weiter von dem Schaltkopf und dem Nabenabschnitt entfernt ist.

2. Getriebe nach Anspruch 1, wobei die Verriegelungsplatte um eine Schaltauswahlwellenachse rotieren kann, und wobei ein zweites Ende (226b) der Verriegelungsplatte, das auf einer Seite liegt, die über die Schaltauswahlwelle einem ersten Ende (226a) der Verriegelungsplatte, in dem die Nut vorgesehen ist, gegenüberliegt, am Gehäuse anliegen kann.

3. Getriebe nach Anspruch 2, wobei sich die Nut in Axialrichtung der Schaltauswahlwelle erstreckt.

4. Getriebe nach Anspruch 2, wobei ein Abstand zwischen der Verriegelungsplatte und dem Gehäuse so eingestellt ist, dass bei einer Druckausübung des Schaltkopfs auf die Verriegelungsplatte in der Nähe einer Seite eines Endes der Nut das zweite Ende der Verriegelungsplatte an einem Abschnitt des Gehäuses anliegt, und der hervorstehende Abschnitt am Nabenabschnitt anliegt.

5. Getriebe nach Anspruch 1 oder 4, wobei sich ein Teil der Verriegelungsplatte in Richtung der Schaltkopfseite erstreckt.

6. Getriebe nach einem der Ansprüche 1, 4, oder 5, wobei der Nabenabschnitt so ausgebildet ist, dass eine Seite, die nahe am Schaltkopf liegt, näher an der Verriegelungsplatte liegt als eine Seite, die weiter entfernt vom Schaltkopf liegt.

7. Getriebe, mit:
einem Gehäuse (C);
einer Verriegelungsplatte (26), die im Gehäuse vorgesehen ist und eine Nut (26c) zur Aufnahme eines Innenhebels (21) aufweist, wobei die Verriegelungsplatte um eine Achse einer Schaltauswahlwelle (20) rotieren kann, wobei
sich der Innenhebel entlang der Erstreckungsrichtung der Nut bewegen kann,und
wenn ein Schaltkopf (23a) auf einen Teil der Verriegelungsplatte auf der Seite eines Endes (126a) der Nut Druck ausübt, ein Teil der Verriegelungsplatte auf der Seite des anderen Endes (126b) der Nut am Gehäuse anliegt, **dadurch gekennzeichnet, dass**:
das Gehäuse einen Nabenabschnitt (110c) hat, der so ausgebildet ist, dass er sich auf der Seite des anderen Endes der Nut in Richtung der Verriegelungsplatte erstreckt und die Schaltauswahlwelle aufnimmt, und
sich ein Teil der Verriegelungsplatte in Richtung der Schaltkopfseite erstreckt.

8. Getriebe, mit:
einem Gehäuse (C);
einer Verriegelungsplatte (26), die im Gehäuse vorgesehen ist und eine Nut (26c) zur Aufnahme eines Innenhebels (21) aufweist, wobei
sich der Innenhebel entlang der Erstreckungsrichtung der Nut bewegen kann, und
wenn ein Schaltkopf (23a) auf einen Teil der Verriegelungsplatte auf der Seite eines Endes (126a) der Nut Druck ausübt, ein Teil der Verriegelungsplatte auf der Seite des anderen Endes (126b) der Nut am Gehäuse anliegt, **dadurch gekennzeichnet, dass**:
das Gehäuse einen Nabenabschnitt (110c) hat, der so ausgebildet ist, dass er sich auf der Seite des anderen Endes der Nut in Richtung der Verriegelungsplatte erstreckt und eine Schaltauswahlwelle lagert, und
der Nabenabschnitt so ausgebildet ist, dass eine Seite, die nahe am Schaltkopf liegt, näher an der Verriegelungsplatte liegt als eine Seite, die weiter entfernt vom Schaltkopf liegt.

## Revendications

1. Transmission comprenant :
un carter (C) ;
une plaque de verrouillage (26) qui est prévue à l'intérieur du carter et est prévue avec une rainure (26c) qui reçoit un levier interne (21), dans laquelle :
le levier interne peut se déplacer le long d'une direction d'extension de la rainure, et
lorsqu'une tête de changement de vitesse (23a) applique la pression sur une partie de la plaque de verrouillage sur un côté d'une extrémité (126a) de la rainure, une partie de la plaque de verrouillage sur un côté de l'autre extrémité (126b) de la rainure vient en butée contre le carter, **caractérisée en ce que** :
le carter a une partie de bossage (110c) qui est formée pour s'étendre vers la plaque de verrouillage du côté de l'autre extrémité de la rainure et supporte un arbre de changement de vitesse,
la partie de la plaque de verrouillage du côté de l'autre extrémité de la rainure est une partie en saillie qui fait saillie dans la direction axiale de l'arbre de changement de vitesse vers la partie de bossage, et
une distance entre une partie (126f) de la partie en saillie du côté qui est à proximité de la tête de changement de vitesse et la partie de bossage est inférieure à une distance entre une partie de la partie en saillie (126h) sur le côté qui est à distance de la tête de changement de vitesse et de la partie de bossage.

2. Transmission selon la revendication 1, dans lequel la plaque de verrouillage peut tourner autour d'un axe d'arbre de changement de vitesse, et dans laquelle une seconde extrémité (226b) de la plaque de verrouillage positionnée sur un côté opposé, via l'arbre de changement de vitesse, à une première extrémité (226a) de la plaque de verrouillage dans laquelle la rainure est prévue, peut venir en butée contre le carter.

3. Transmission selon la revendication 2, dans laquelle la rainure s'étend dans une direction axiale de l'arbre de changement de vitesse.

4. Transmission selon la revendication 2, dans laquelle un jeu entre la plaque de verrouillage et le carter est ajusté de sorte que lorsque la tête de changement de vitesse applique la pression sur la plaque de verrouillage à proximité d'un côté d'extrémité de la rainure, la seconde extrémité de la plaque de verrouillage vient en butée contre une partie différente de la partie de bossage dans le carter et ensuite la partie en saillie vient en butée contre la partie de bossage.

5. Transmission selon l'une quelconque des revendications 1 ou 4, dans laquelle une partie de la plaque de verrouillage s'étend du côté de la tête de changement de vitesse.

6. Transmission selon l'une quelconque des revendications 1, 4 ou 5, dans laquelle la partie de bossage est formée de sorte qu'un côté, qui est à proximité de la tête de changement de vitesse, est plus proche de la plaque de verrouillage que d'un côté qui est éloigné de la tête de changement de vitesse.

7. Transmission comprenant :
un carter (C) ;
une plaque de verrouillage (26) qui est prévue à l'intérieur du carter et est prévue avec une rainure (26c) qui reçoit un levier interne (21), dans laquelle la plaque de verrouillage peut tourner autour de l'axe d'un arbre de changement de vitesse (20), dans laquelle :
le levier interne peut se déplacer le long d'une direction d'extension de la rainure, et
lorsqu'une tête de changement de vitesse (23a) applique la pression sur une partie de la plaque de verrouillage sur un côté d'une extrémité (126a) de la rainure, une partie de la plaque de verrouillage sur un côté de l'autre extrémité (126b) de la rainure vient en butée contre le carter, **caractérisée en ce que** :
le carter a une partie de bossage (110c) qui est formée afin de s'étendre vers la plaque de verrouillage du côté de l'autre extrémité de la rainure et reçoit l'arbre de changement de vitesse, et
une partie de la plaque de verrouillage s'étend du côté de la tête de changement de vitesse (23a).

8. Transmission comprenant :
un carter (C) ;
une plaque de verrouillage (26) qui est prévue à l'intérieur du carter et qui est prévue avec une rainure (26c) qui reçoit un levier interne (21), dans laquelle :
le levier interne peut se déplacer le long d'une direction d'extension de la rainure, et
lorsqu'une tête de changement de vitesse (23a) applique la pression sur une partie de la plaque de verrouillage sur un côté de la première extrémité (126a) de la rainure, une partie de la plaque de verrouillage sur un côté de l'autre extrémité (126b) de la rainure vient en butée contre le carter, **caractérisée en ce que** :
le carter a une partie de bossage (110c) qui est formée pour s'étendre vers la plaque de verrouillage du côté de l'autre extrémité de la rainure et supporte un arbre de changement de vitesse, et
la partie de bossage est formée de sorte qu'un côté, qui est à proximité de la tête de changement de vitesse, est plus proche de la plaque de verrouillage qu'un côté qui est éloigné de la tête de changement de vitesse.
